# EUROPEAN PATENT SPECIFICATION

(11) **EP 0 581 300 B1**
(45) Date of publication and mention of the grant of the patent: **07.10.1998**
(21) Application number: 93112234.5
(22) Date of filing: 30.07.1993
(51) Int. Cl.: H02P 8/00

(54) **Stepping motor control system**
Regelsystem für einen Schrittmotor
Système de commande d'un moteur pas à pas

(30) Priority: 30.07.1992 JP 203863/92
(43) Date of publication of application: 02.02.1994
(73) Proprietor: CANON KABUSHIKI KAISHA, Tokyo (JP)
(72) Inventor: Nakata, Kazuhiro , C/O Canon Kabushiki Kaisha, Tokyo (JP)
(74) Representative: Weser, Wolfgang

(56) References cited:
- EP-A- 0 311 095
- EP-A- 0 460 776
- DE-A- 2 721 630
- US-A- 4 622 603
- PATENT ABSTRACTS OF JAPAN vol. 9, no. 154 (E-325) 28 June 1985 & JP-A-60 032 597 (HITACHI SEISAKUSHO KK) 19 February 1985
- PATENT ABSTRACTS OF JAPAN vol. 11, no. 119 (E-499) (2566) 14 April 1987 & JP-A-61 266 097 (HITACHI LTD) 25 November 1986
- PATENT ABSTRACTS OF JAPAN vol. 5, no. 110 (P-071) 17 July 1981 & JP-A-56 051 689 (RHYTHM WATCH CO LTD) 9 May 1981

## Description

### BACKGROUND OF THE INVENTION

The present invention relates to a stepping motor control system of the type as defined in the preamble clause of claim 1 and known from DE-A-2 731 630. More particularly the present invention relates to a stepping motor control system including a plurality of operation modes, that is, when an operation is to be conducted by slow up/down means or when a constant speed operation is to be conducted at a plurality of speeds.

It is known to use a constant-voltage drive system for driving a stepping motor. Because this system is simplest in circuit configuration and most inexpensive in cost, it has been widely used.

Further, it is known to use a constant-current system as the drive system for a high speed rotation of a stepping motor. In this system, the current flowing in a motor winding is detected to control it to a preset current level by driving a switching device such as a transistor by pulse width modulation (herein abbreviated with PWM).

However, in a stepping motor drive circuit based on the constant voltage system, when the drive frequency of the stepping motor rises, the rise of the current is slow due to the inductance of the motor winding and causes a reduction of the motor's torque. As a result, a high speed rotation is not attained.

While in the constant current system, a high speed operation of the motor is attained, the necessity to have a current detection function renders the circuit complex and increases the cost.

In general, the higher the rotation speed of the stepping motor, the smaller is the generated torque. Accordingly, when the current is set to generate the torque required in a high speed rotation mode, the motor vibrates in a low rotation speed mode because of an excessive torque, and a noise is readily generated. In order to solve it, it is necessary to set different current levels in accordance with the rotation speed. This makes the circuit further complex.

According to the above mentioned DE-A-27 21 630, a stepping motor may be driven with lower vibration and lower noise by using step pulses, the frequency and/or length of which are varied so as to obtain a steady mean value for the operation current flow with time.

Further, it is known from EP-A-460 776 that each driving step period is divided into a plurality of parts, with the duty factor being changed at each of said parts of the driving step period.

### SUMMARY OF THE INVENTION

The present invention is directed to a stepping motor control system of the initially mentioned type and is defined by the features as delineated in the characterizing clause of claim 1.

Further developments of the invention are the subject matter of the subclaims.

According to the present invention, there is attained a circuit configuration which permits the rotation of the motor at a higher speed than that in the constant voltage drive system and simpler and less expensive than that of the constant current system. Further, since the power may be supplied in accordance with the rotation speed by suitably changing the PWM duty factor, the motor can be rotated without necessity to supply unnecessary power, so that saving of power consumption and a reduction of noise are attained even in a low speed operation.

### BRIEF DESCRIPTION OF THE DRAWINGS

Fig. 1 shows a drive circuit of a stepping motor in accordance with a first embodiment,
Fig. 2 shows control signal waveforms of the stepping motor shown in Fig. 1,
Fig. 3 shows a format of PWM duty factor data stored in a ROM shown in Fig. 1,
Fig. 4 shows a motor drive waveforms in accordance with the PWM duty factors of Fig. 3,
Fig. 5 shows a drive circuit of a stepping motor in accordance with a second embodiment,
Fig. 6 shows control signal waveforms of the stepping motor shown in Fig. 5, and
Fig. 7 shows a format of PWM duty factor data stored in a ROM in accordance with an embodiment of the present invention.

### DETAILED DESCRIPTION OF PREFERRED EMBODIMENTS

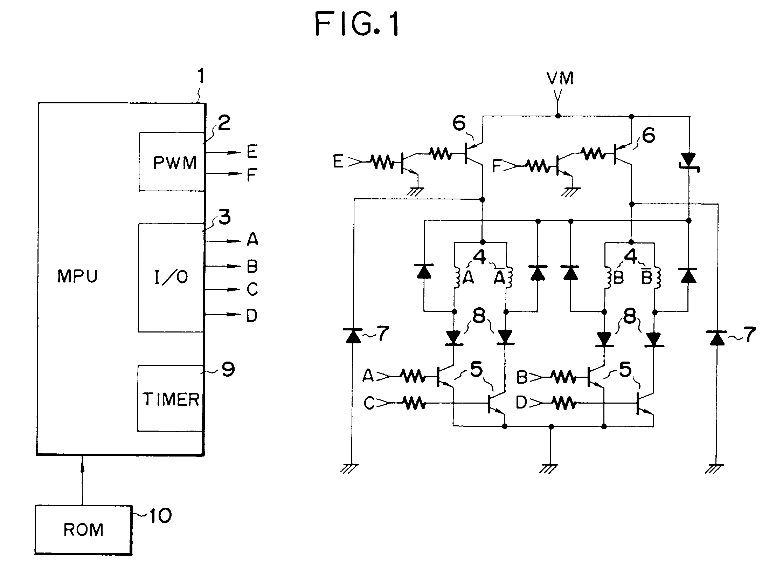

### Embodiment 1 (Figs. 1 to 4)

Fig. 1 shows a drive circuit of a stepping motor. In Fig. 1, numeral 1 denotes a microcontroller for controlling the motor, numeral 2 denotes a pulse width modulation unit (hereinafter a PWM unit) built in the microcontroller 1 for producing variable frequency and variable duty factor pulse signals E and F; numeral 3 denotes an output port built in the microcontroller 1 for generating coded stepping motor drive signals A, B, C and D; numeral 4 denotes a unipolar-connected 2-phase stepping motor; numeral 5 denotes transistors for exciting the stepping motor 4 by the drive signals A, B, C and D; numeral 6 denotes current control transistors for controlling the current flowing in the stepping motor 4 by pulse signals E and F; numeral 7 denotes a fly-wheel diode for establishing a current flow path when the current control transistor 6 is turned off; numeral 8 denotes a diode for preventing a back current by the induced voltage in the winding of the stepping motor 4; numeral 9 denotes a programmable timer unit built in the microcontroller 1; and numeral 10 denotes a ROM, which stores data such as drive speeds of the motor 4 and the PWM duty factors. The data is read by the microcontroller 1.

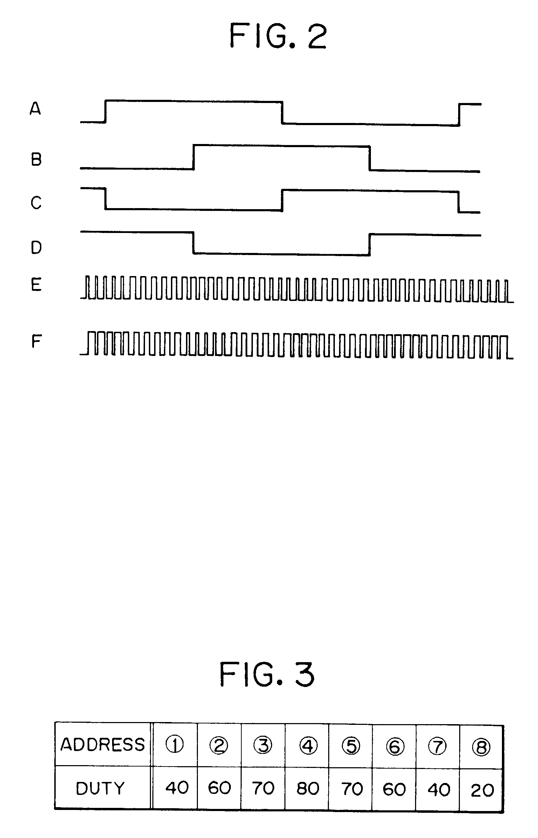

Waveforms of control signals for controlling the stepping motor 4 are shown in Fig. 2. The microcontroller 1 generates the control signals A, B, C and D for driving the stepping motor 4 in a 2-phase excitation from the output port 3. When those control signals are at H level (high level), the transistors 5 connected to those control signals are turned on and the corresponding windings of the stepping motor 4 are excited. A timing to change the control signals, that is, a step time is determined by the microcontroller 1 by using the timer unit 9. By adjusting the step time, modes such as acceleration, deceleration and constant speed operation are controlled.

The microcontroller 1 supplies the pulse waveforms E and F to the PWM unit 2. Those pulse waveforms are outputted at a predetermined duty at a constant timing at a frequency of 20 KHz or higher, which is higher than an audible range for human being's ear. A timing to change the duty factor is also determined by the microcontroller 1 by using the timer unit 9. When the pulse output is at H level, the current control transistor 6 is turned on and supplies power to the motor 4. When it is off, the energy stored in motor 4 is discharged through the flywheel diode 8. By repeating the above, the current flowing in the winding of the motor 4 is controlled by the duty factors of the pulse waveforms E and F.

An example of the data of the PWM duty factors stored in the ROM 10 is shown in the table of Fig. 3. Numerals 1 to 8 in the upper line are ROM addresses which are assigned for the sake of convenience.

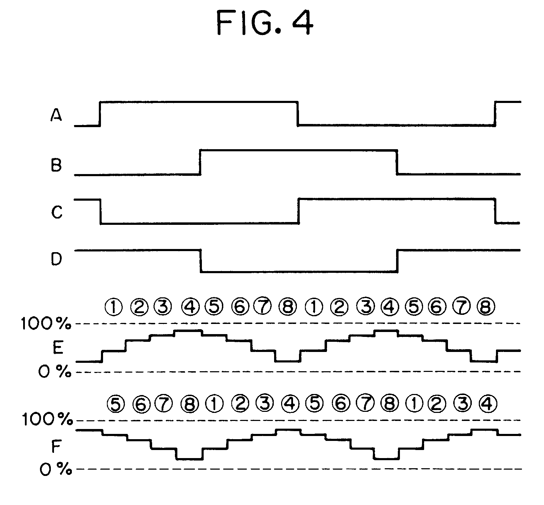

Motor drive waveforms based on the PWM duty factor data of Fig. 3 are shown in Fig. 4. The signal waveforms E and F herein are not actual pulse waveforms but represent duty factors of the pulses by signal levels thereof. In Fig. 4, the microcontroller 1 changes the drive signals A and C and sets the duty factor of the PWM pulse E to 40% in accordance with the numeric value 40 stored in address 1 of ROM 10. Then, after lapse of one quarter of the step period, it sets the duty factor of the PWM pulse E to 60% in accordance with the numeric value 60 stored in address 2 of ROM 10. Similarly, the PWM data are sequentially read from ROM 10 to set the duty factors. For the PWM pulse F, the value which is shifted by 90 degrees from pulse E is set. Accordingly, when the data read from address 1 is set to E, the data read from address 5 is set to F. In this manner, the current flowing in the motor can be controlled at one quarter period of the step period, and there is attained the same effect as that one of a prior art drive method known as a 1-2 phase driver. Namely, by approaching the current waveform of the motor to a sine wave, the motor can be driven at high efficiency with low noise. Since the current flowing in the motor is affected by the inductance of the motor winding and a counter-electromotive force created thereby, the PWM duty factor is generally not proportional to the motor current, but the current waveform can be controlled into the sine wave by storing, in ROM 10, a duty factor data corrected to compensate for this effect.

As described above, by changing the PWM duty factor in one step of the motor drive, the motor current waveform is approached to a sine wave, and an operation of the motor is attained at high efficiency and with low vibration. In the present embodiment, the PWM duty factor is controlled at a period equal to one quarter of step but the control timing may be further divided to attain still lower vibration.

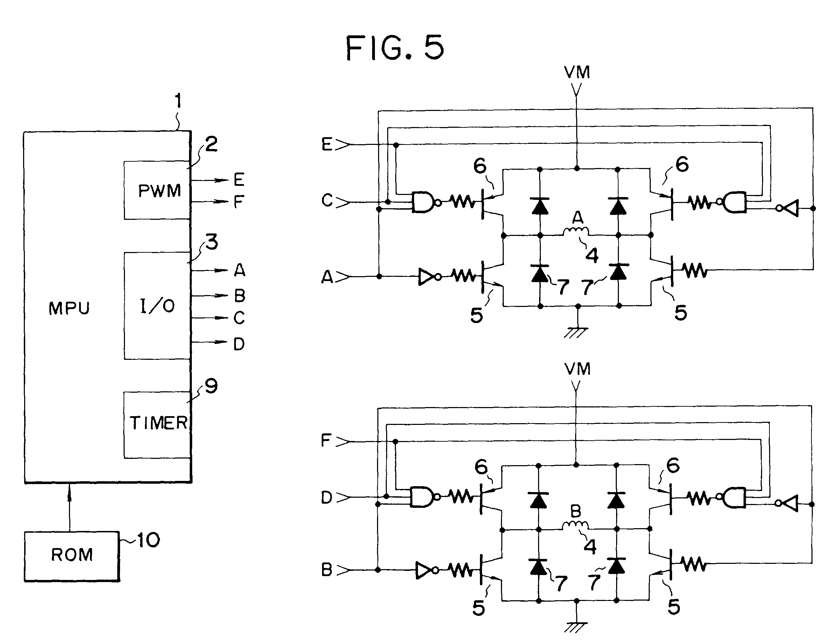

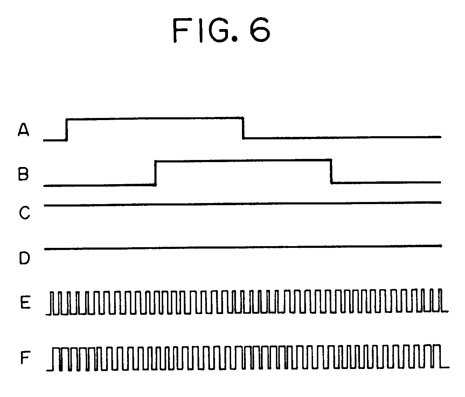

### Embodiment 2 (Figs. 5 and 6)

The first embodiment referred to a motor with unipolar drive, although the present invention is also applicable to a motor with bipolar drive. The second embodiment refers this latter case.

In the block diagram of Fig. 5, numeral 1 denotes a microcontroller for controlling a motor; numeral 2 denotes a pulse width modulation unit (hereinafter a PWM unit) built in the microcontroller 1 for outputting pulse signals E and F of variable frequency and variable duty factor; numeral 3 denotes an output port built in the microcontroller 1 for generating coded stepping motor drive signals A, B, C and D; numeral 4 denotes a bipolar-connected 2-phase stepping motor; numeral 5 denotes transistors for selecting phase excitation and direction of current of the stepping motor 4 by the drive signals A and B; numeral 6 denotes transistors for controlling the current flowing in the stepping motor 4 by the pulse signals E and F and selecting phase excitation and direction of current by the drive signals A, B, C and D; numeral 7 denotes flywheel diodes for establishing each a current flow path when a transistor 6 is turned off; numeral 9 denotes a programmable timer unit built in the microcomputer 1; and numeral 10 denotes a ROM which stores data such as the drive speed of the motor 4 and the PWM duty factors. The data of the ROM is read by the microcontroller 1.

In the above configuration, the drive signals A and B are signals for selecting the direction of the current flowing in the motor winding 4, and they are supplied to the transistors 5 and 6. The drive signals C and D are signals for controlling the turn-on/off of the current in the motor winding 4 and they are supplied to the transistor 6. The basic control is same as that one in embodiment 1, but in the 2-phase excitation the motor phase can be controlled by only the drive signals A and B. Waveforms of the control signals therefor are shown in Fig. 6. In Fig. 6, the directions of the currents flowing in the two motor windings 4 are controlled by the drive signals A and B, and powers supplied to the motor windings 4 are controlled by the duty factors of the pulse signals E and F.

As described above, a motor control similar to that one in embodiment 1 is attained for the motor of the bipolar winding.

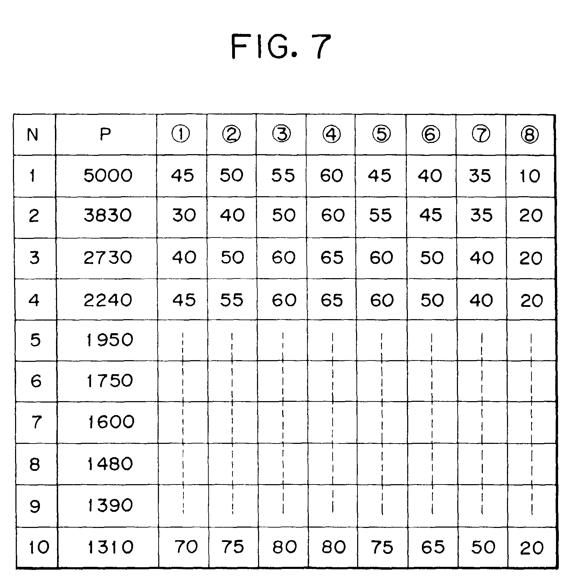

### Embodiment 3 (Fig. 7)

An embodiment of the present invention is now explained.

In the first and second embodiments, the methods for setting the PWM duty factors were explained, but in an actual motor operation, the rotation speed is frequently varied by slow up/down. In the present embodiment, there is provided a method for setting the PWM duty factors when the motor rotation speed is varied.

In the stepping motor, the higher the drive frequency is, the slower is the rise of the current due to the inductance of the motor winding. Further, the higher the rotation speed is, the larger is the counter-electromotive force and the harder the current flows. As a result, in case of setting of the PWM duty factors to be constant and the higher the rotation speed is, the more the current flowing in the motor is reduced and the smaller is the generated torque. In order to prevent this, it is necessary to increase the PWM duty factor as the rotation speed increases.

Fig. 7 shows an example of data of the PWM duty factors for the slow-up of the motor. It is stored in the ROM as it is in embodiment 1. In the table of Fig. 7, N denotes the step number; P denotes the step period; and each line shown by numerals 1 to 8 shows duty factor data as in Fig. 3. It is seen from the fact that the step numbers are 1 to 10, that ten steps are required for a slow-up in the present embodiment. In step 1, the step period is 5000 µs as shown by 5000 for the step period P in the first line of Fig. 7. During this period, the PWM duty factor is set by using the PWM duty factor data of the first line of Fig. 7. The method for setting the duty factor is the same as that of the embodiment 1. In step 2, the step period is 3830 µs. During this period, the PWM duty factor is set by using the PWM duty factor data of the second line of Fig. 7. The step period differs from step to step, but the PWM duty factor is always set at every one quarter of the step period by adjusting the time setting of the timer. The step period and the PWM duty factor are sequentially set up to step 10. In steps 11 and et seq, the same step period and PWM duty factor as those of step 10 are used. In this manner, the PWM duty factor for the rotation speed is set even if the motor rotation speed changes and the current can be maintained constant.

In the present embodiment, the PWM duty factor data is prepared for each step. Alternatively, one PWM duty factor data may be provided for every several steps to reduce the volume of data and save ROM capacity. While the slow-up of the motor is explained in the present emodiment, the control may be done in the same manner for the slow-down.

It is possible to control to increase the current flowing in the motor only in the slow-up mode by merely changing the setting of the PWM duty factor data. During acceleration of the motor, an acceleration torque as well as a load torque are required. As a result, a large torque may be needed in the slow-up mode compared to a torque in a constant speed operation. Even in such a case, the current in the slow-up mode can be readily increased to increase the torque by merely changing the setting of the PWM duty factor data. In this manner, in the present embodiment, the torque can be adjusted by merely changing the setting of the PWM duty factor data so that a highly efficient motor operation is attained.

In accordance with the present invention, a circuit configuration which permits the rotation of the motor at a higher speed than that in the constant voltage drive system and simpler and less expensive than that of the constant current system is attained. Further, since the current flowing in the motor is rendered sinusoidal, a low vibration and low noise motor operation is attained. Further, since the power is supplied in accordance with the rotation speed by suitably changing the PWM duty factor, the motor can be rotated without the necessity to supply unnecessary power so that a saving of power consumption and a reduction of noise are attained even in a low speed operation.

An application of the present invention may be the drive of a carriage motor used in the horizontal scan of a serial printer. In this case, advantages of high speed, low cost, low noise and low power consumption are attained. Particularly in an ink jet printer, such as a bubble jet printer, which generates substantially no print noise, the application of the present invention offers a great advantage in reducing noise.

While not particularily explained in the embodiments, the motor drive circuits of Figs. 1 and 5 may also be implemented by integrated circuits to reduce packaging area and cost.

## Claims

1. A stepping motor control system comprising:
- a stepping motor (4);
- drive means (5, 6) for driving said stepping motor;
- step drive signal generation means (1, 3) for applying a step drive signal to said drive means to stepwise drive said stepping motor;
- pulse generation means (1, 2) for applying a pulse of a preset duty factor to said drive means to control a drive current for driving said stepping motor;
- memory means (10) for storing a plurality of duty factor data of the pulse; and
- changing means (1, 2, 3, 10) for changing the duty factor of the pulse in accordance with the duty factor data of the pulse in one step drive of said stepping motor;
characterized in that
- each driving step period (P) is divided into a plurality of parts, the duty factor being changed at each of said parts of the driving step period;
- the duty factor data selected in said memory means are dependent on the period (P) of said drive step of said stepping motor.

2. The system according to claim 1, wherein
the duty factor data in said memory means are set such that a drive current waveform of said stepping motor is a sinusoidal wave.

## Patentansprüche

1. Schrittmotorsteuersystem, umfassend:
- einen Schrittmotor (4);
- eine Treibereinrichtung (5, 6) zum Treiben des Schrittmotors;
- eine Schritttreibersignal-Erzeugungseinrichtung (1, 3) zum Zuführen eines Schritttreiber-Signals an die Treibereinrichtung zum schrittweisen Treiben des Schrittmotors;
- eine Impulserzeugungseinrichtung (1, 2) zum Zuführen eines Impulses eines voreingestellten Auftast-Faktors an die Treibereinrichtung zur Steuerung eines Treiberstroms zum Treiben des Schrittmotors;
- eine Speichereinrichtung (10) zum Speichern einer Mehrzahl Auftast-Faktorendaten des Impulses; und
- eine Änderungseinrichtung (1, 2, 3, 10) zum Ändern des Auftast-Faktors des Impulses entsprechend dem Auftast-Faktordatums des Impulses bei einem Schrittantrieb des Schrittmotors;
dadurch gekennzeichnet, daß
- jede Treiberschrittperiode (P) in eine Mehrzahl Teile unterteilt ist, wobei der Auftast-Faktor bei jedem der Teile der Treiberschrittperiode geändert wird;
- die in der Speichereinrichtung selektierten Auftast-Faktordaten abhängig sind von der Periode (P) des Treiberschritts des Schrittmotors.

2. System nach Anspruch 1, bei dem
die Auftast-Faktordaten in der Speichereinrichtung so eingestellt werden, daß eine Treiberstromwellenform des Schrittmotors eine sinusförmige Welle ist.

## Revendications

1. Système de commande d'un moteur pas-à-pas comprenant :
- un moteur pas-à-pas (4) ;
- des moyens d'attaque (5, 6) pour attaquer ledit moteur pas-à-pas ;
- des moyens de génération de signal d'attaque par pas (1, 3) pour appliquer un signal d'attaque par pas auxdits moyens d'attaque pour attaquer pas à pas ledit moteur pas-à-pas ;
- des moyens de génération d'impulsions (1, 2) pour appliquer une impulsion d'un rapport cyclique prédéfini auxdits moyens d'attaque afin de commander un courant d'attaque pour attaquer ledit moteur pas-à-pas ;
- des moyens de mémoire (10) pour mémoriser une pluralité de données de rapport cyclique de l'impulsion ; et
- des moyens de modification (1, 2, 3, 10) pour modifier le rapport cyclique de l'impulsion selon les données de rapport cyclique de l'impulsion dans une attaque de pas dudit moteur pas-à-pas;
caractérisé en ce que
- chaque période de pas d'attaque (P) est divisée en une pluralité de parties, le rapport cyclique étant changé à chacune desdites parties de la période de pas d'attaque ;
- les données de rapport cyclique sélectionnées dans lesdits moyens de mémoire sont fonction de la période (P) dudit pas d'attaque dudit moteur pas-à-pas.

2. Système selon la revendication 1, dans lequel
les données de rapport cyclique dans lesdits moyens de mémoire sont définies de telle sorte qu'une forme d'onde de courant d'attaque dudit moteur pas-à-pas soit une onde sinusoïdale.
